# EUROPEAN PATENT SPECIFICATION

(11) **EP 2 525 878 B1**
(45) Date of publication and mention of the grant of the patent: **24.12.2014**
(21) Application number: 11704667.2
(22) Date of filing: 11.01.2011
(51) Int. Cl.: A62B 35/00, A63B 29/02, F16B 45/02

(54) **SAFETY SYSTEM WITH TWO CARABINERS EACH ONE TO BE HUNG TO A BELAY ELEMENT FOR CLIMBING PURPOSES, ADVENTURE PARKS, WORKS ON CIVIL STRUCTURES OR GENERALLY WORKS REQUIRING SAFETY ROPES**
SICHERHEITSSYSTEM MIT ZWEI JEWEILS AN EINEM SELBSTSICHERUNGSELEMENT AUFGEHÄNGTEN KARABINERHAKEN FÜR KLETTERZWECKE, ABENTEUERPARKS, ARBEITEN AN INGENIEURBAUTEN ODER ALLGEMEINE ARBEITEN, DIE SICHERHEITSSEILE ERFORDERN
SYSTÈME DE SÉCURITÉ À DEUX MOUSQUETONS, CHACUN DEVANT ÊTRE SUSPENDU À UN ÉLÉMENT D'ASSURANCE À DES FINS D'ESCALADE, POUR DES PARCS D'AVENTURE, DES TRAVAUX SUR DES STRUCTURES CIVILES OU DES TRAVAUX EN GÉNÉRAL NÉCESSITANT DES CÂBLES DE SÉCURITÉ

(30) Priority: 20.01.2010 IT MI20100056
(43) Date of publication of application: 28.11.2012
(73) Proprietor: 4geco S.r.l., 23834 Premana (lC) (IT)
(72) Inventor: MALUGANI, Emilio, I-23832 Margno (LC) (IT); BEVILACQUA, Giorgio, I-23834 Premana (lc) (IT); VITTORI, Gabriella, I-23834 Premana (lc) (IT); MALUGANI, Luca, I-23832 Margno (lc) (IT)
(74) Representative: Postiglione, Ferruccio
(86) International application number: PCT/IB2011/050109
(87) International publication number: WO 2011/089535

(56) References cited:
- WO-A1-2008/049143
- WO-A1-2008/049899

## Description

### Field of the invention

The present invention generally relates to a safety system with two carabiners to be hung to a belay element and in particular to carabiners for such a system.

### Summary

It is the object of the invention to provide a carabiner for a safety system with two carabiners to be hung to a belay element for climbing purposes, in so-called adventure parks or in general, but not only, works on civil structures or works requiring usually safety ropes, wherein one of the carabiners cannot be opened and disengaged from the belay element if the second carabiner is not closed on a belay element, in order to prevent both carabiners from being disengaged simultaneously from a belay element, thereby the user of the system night for whatever reason to get detached from a belay element and fall down. A known safety system is disclosed in the document WO 2008/049899 Al.

The safety system, which foresees the use of carabiners to be hung to a belay element in various uses, substantially comprises two carabiners, in accordance with the present invention, connected to each other by a short length of an inextensible cable such that the open part or mouth of a carabiner to disengage it from a belay element causes the other carabiner to be surely closed, so that there will be a carabiner always hung to the belay element, such as, for example, a piton secured to a face to be climbed, to a fixed cord of an iron way or a route with facilities in an adventure park, or an any fixed element of a scaffolding or the like, all as generally defined in claim 1 and in further details in the dependent claims thereon.

The invention will be disclosed hereinafter in detail in respect to an exemplary, but not limitative, embodiment, referring to the attached drawings, wherein:

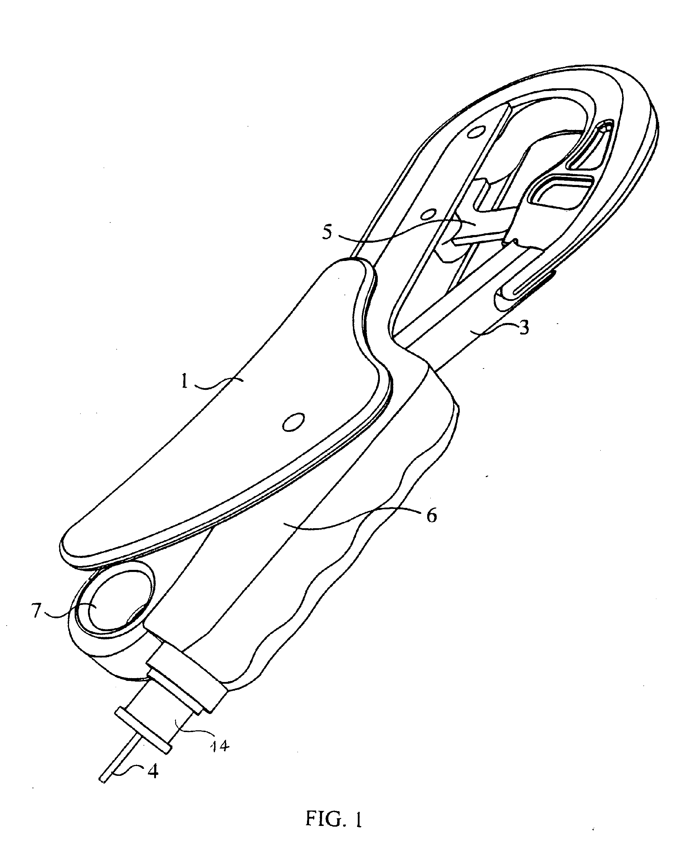

Figure 1 is a perspective view of a single carabiner according to the present invention, the second carabiner being almost the same as the first one;

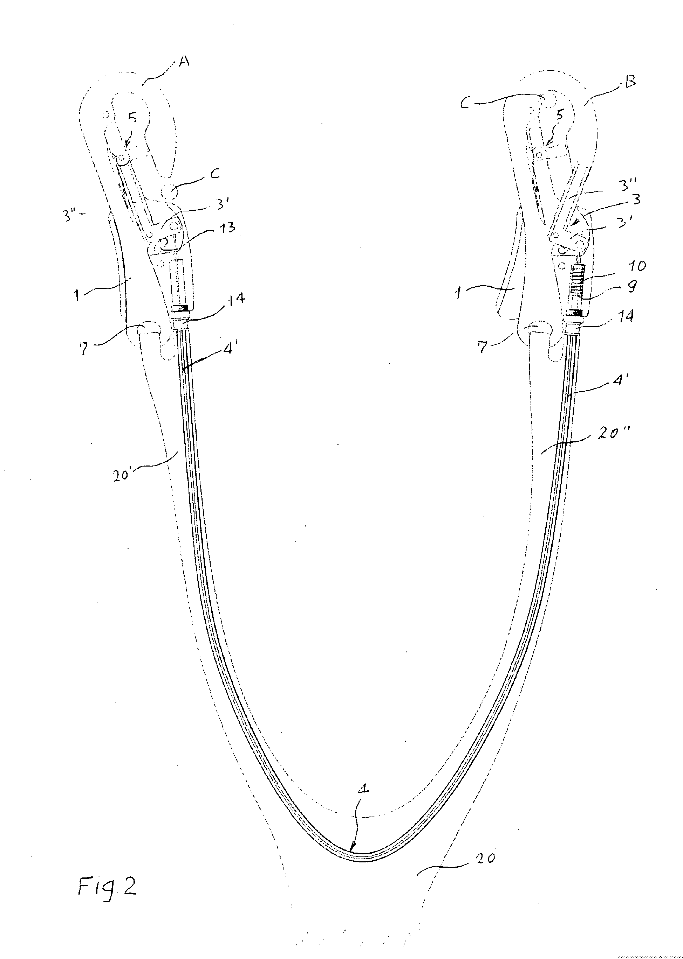

Figure 2 is an elevation side and partially in cross-section view of a pair of carabiners, one carabiner being open and the other carabiner being closed, connected to each other by an inextensible cable inserted in a dimensionally unchangeable sheath, all of which seated in a connection yoke to be hung to the personal safety belt of the user;
Figure 3 is a side view, partially in cross-section, of the same pair of carabiners in a first starting condition wherein both carabiners are closed;
Figure 4 is a side view, partially in cross-section, of the same pair of carabiners in a second condition wherein the first carabiner is open and the second is closed;
Figure 5 shows a side view, partially in cross-section, of the same pair of carabiners in a third condition wherein the first carabiner is closed and the second is open.

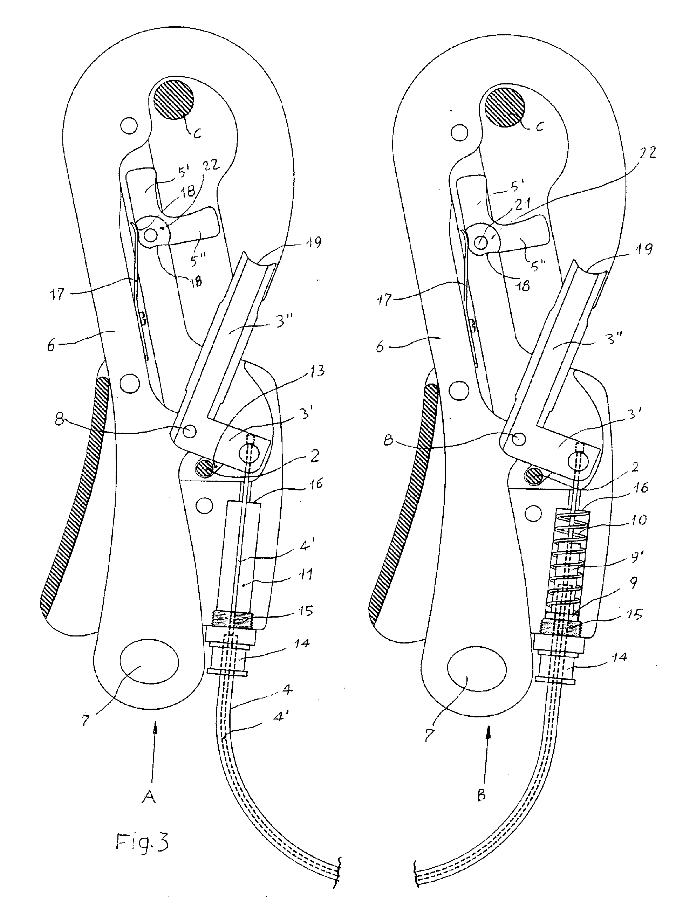

Referring to the several Figures, the structure of each of the two carabiners, denoted by A and B, will be now disclosed. Each carabiner is made of a C-shaped body 6. According to the invention, the two carabiners are supplemented by a L-shaped balancing lever 3, pivoted at 8, adapted to close the open part or mouth of the carabiner. Just above the end of the longer arm 3" of the balancing arm 3 at a basically vertical position (carabiner A in Fig. 3) a L-shaped turnstile 5 pivoted at 21 is angularly rotatable in two positions at 90° to each other. The turnstile 5 is kept in each of the two positions, acting as a mechanical memory, by a resilient dragging blade 17 sliding, with a frictional action on the turnstile 5, at an elbow formed by the junction of the two arms 5', 5" thereof, and it lies within one of the two notches or flats 18 provided in said two possible operative positions.

In the lower part of the C-shaped body 6 a hole 7 is provided for coupling to arms 20' and 20" of a connection element 20 of the two carabiners which is in turn connectable to the personal safety belt worn by a user. Inside said connection element 20 there is a dimensionally unchangeable tubular sheath 4 in which an inextensible element is seated and slides, such as a cable 4', preferably of metal, of the kind used for example for bicycle brakes. Both the sheath 4 and the cable 4' connect the two carabiners A, B to each other so that both the carabiners are prevented from being simultaneously at an opening position.

The balancing lever 3 of each carabiner is pivoted at 8 on the enlarged lower part of the body 6 of each of the two carabiners A, B at the joint point of the two arms 3', 3" thereof so that it may swing from an open position to a closed position of the carabiner and vice versa. The external end of the shorter arm 3' of the balancing lever 3 of each of the carabiners A and B is connected to said cable 4', which connects the balancing levers 3 of the two carabiners A and B to each other.

At the lower part of the body of each of the carabiners an open downwardly cavity 11 is formed, said cavity being closed by a bored cap 14 screwed in the thread 15. Through the hole of said bored caps 14 the metal cable 4' can slide.

Only in one of said carabiners, for example the carabiner B in Figure 3, said cavity houses a cylindrical compression spring 10 which presses, on the top, against the shoulder 16 formed by the top external end of said cavity 11 and, on the bottom, by a vertically reciprocating bored piston 9, said compression spring 10 being wound around the stem 9' of piston 9. said cable 4' passes through said piston 9 and its stem 9'. In the other carabiner, for example, the carabiner A, neither the spring 10 nor the piston 9, 9' are provided.

One end of the dimensionally unchangeable sheath 4 is rigidly attached to the cap 14 of a carabiner, for example carabiner A, and the other end is connected to the piston 9 of the other carabiner, for example carabiner B.

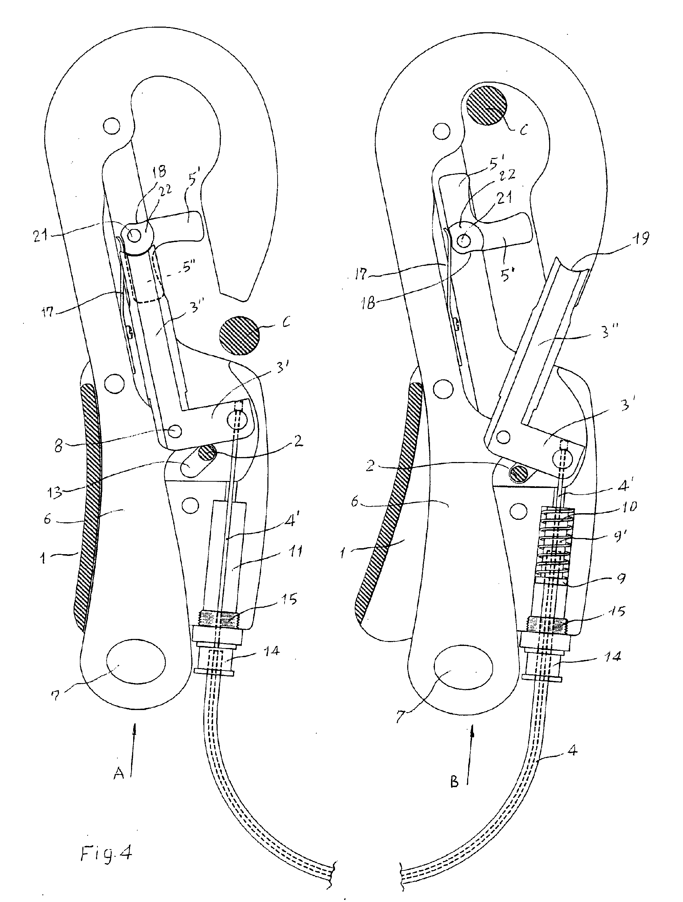

The swinging movement of the balancing lever 3 between its two opening and closing positions is achieved due to the fact that each carabiner is provided with a actuation handle 1, pivoted on the carabiner body, which is susceptible of an angular swinging movement. Such a handle 1 is provided of a pin 2 suitable to slide within a guiding slit 13 formed in the carabiner body. When the handle 1 of one of the carabiners, for example carabiner A, is clasped in the hand of the user, causing a partial penetration thereof into the carabiner body, the pin 2 moves upwards and rightwards in the inclined guiding slit 14, as shown in Figure 4, and such a movement of the pin 2 causes the respective balancing lever 3 to rotate in anti-clockwise direction, causing the opening of the carabiner A and a drawing action upwards of the cable 4' within the body of such carabiner so that the cable 4' slides within the sheath 4. Since the sheath 4 has one of its ends fixedly locked at the cap 14 of carabiner A, consequently the other end thereof, coupled to the piston 9 of carabiner B, will move upwards within the body of carabiner B, i.e. within cavity 11, in order to accommodate the movement of cable 4' within the carabiner A and keep the respective lengths of both the cable 4' and the sheath 4 unchanged, thereby the spring 10 of carabiner B is compressed. These movements invert when the handle 1 of the carabiner B is clasped.

In the several views, by C a safety cord or any other safety belay element, such as pitons, rings, rails and the like, is denoted.

The operation of such a safety system is as follows.

### STEP 1 (Figure 3)

Let's assume both carabiners are hung on a safety cord C. Under such a condition, in both carabiners A and B the pins 2 are in a lowered position, the balancing levers 3 close the carabiners, and the spring 10 of carabiner B is in an expanded condition. The resilient dragging blade 17, resting in one of its notches 18, will keep the turnstile 5 in the position it has assumed.

### STEP 2 (Figure 4)

The subsequent operation to be carried out will be the detaching of the carabiner A from the belay element C. To do this, a clamping action (as it happens when actuating pliers are actuated) is performed on the handle 1 of carabiner A, thereby the respective pin 2 moves upwards and rightwards, causing the balancing lever 3 to rotate anti-clockwise in the opening position. By keeping the handle 1 of carabiner A clasped, the carabiner A is lifted upwards so the safety cord C presses downwards on the arm 5" of turnstile 5 which rotates clockwise, bringing the arm 5' into a horizontal position and the arm 5" into a vertical position with the coming of cord C out of carabiner A. The upper end 19 of the balancing lever is slightly concave, so it carefully engages the rounded part of hub 22 of turnstile 5, thereby locking the balancing lever 3 in the opening position since the turnstile 17 is retained in the reached position by the resilient dragging blade 17 engaging one of the notches 18 offset by 90° in respect to each other.

Carabiner B remains closed, since the revolving movement of the balancing lever 3 of carabiner A has caused the sheath 4 to move up again within the housing cavity of piston 9 with a resulting compression of the spring 10.

### STEP 3 (Figure 4)

At this point the carabiner A is open, detached from the safety cord C and ready to be hung to the latter in a subsequent point whereas the carabiner B is still hung on the safety cord C (fig. 4). Therefore, during the carabiner A re-hanging step, the open part or mouth of carabiner A is brought in front of the safety cord C and then it is lowered. This causes the turnstile 5 to be rotated anti-clockwise, whereby its arm 5' is brought into a vertical position whereas its arm 5" is brought into a horizontal position, disengaging the arm 3" of the balancing lever 3, as it can be seen in Figure 3. The balancing lever 3 of the carabiner A reaches a closing position and the handle 1 automatically snaps in the released position (Figure 3).

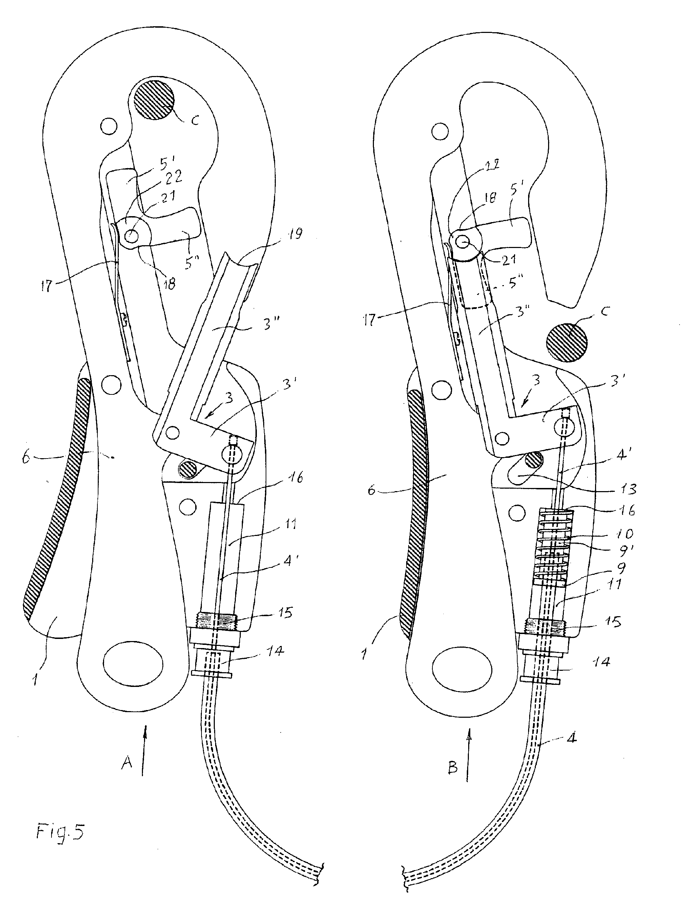

### STEP 4 (Figure 5)

At this point, with the carabiners A and B (Figure 3) hung on the safety cord, the carabiner B may be opened in order to displace it at another position (Figure 5). In order to do this, the handle 1 of carabiner B is clasped, consequently its pin 2 moves upwards and rightwards in the guiding slit 13, the balancing lever 3 angularly rotates anti-clockwise thus causing the opening of the carabiner B. Consequently a traction is performed by the shorter arm 3' of its balancing lever 4' so that the sheath 4 moves up within the cavity 11 of carabiner B and its spring 10 is compressed. Under this condition, still with the carabiner A hung to the safety cord, the open carabiner B may be detached from the safety cord C and hung to another engagement point on the safety cord C with the turnstile 5 rotating anti-clockwise as previously explained in respect to the carabiner A. As a result the balancing lever of the carabiner B rotates clockwise to the closing position, the handle 1 automatically moves to the releasing position, with consequent moving downwards and leftwards of the pin 2 within the guiding slit 13, expansion of the spring 10, lowering of the piston 9, elimination of the tension on the cable 4' and returning to the condition illustrated in Figure 3.

These operations are repeated to disengage and re-engage the two carabiners, being sure that a carabiner is always hung to the safety cord or any other safety element at any time.

It is intended that since an exemplary, but not limitative, embodiment has been herein disclosed, the present invention may be undergone to a number of modifications and variants, all of which fall within the scope of the appended claims.

## Claims

1. Safety system with two carabiners each one to be hung to a belay element for climbing purposes, adventure parks, works on civil structures or works requiring safety ropes wherein the two carabiners (A, B) attachable to the personal safety belt of a user are connected to each other through a inextensible cable (4') and a dimensionally unchangeable sheath (4), each carabiner including:
- a balancing lever (3) controlling the opening and closure of the carabiner;
- a C-shaped carabiner body (6);
- a handle (1), which can be squeezed and released like pliers, which handle acts on said balancing lever (3)
;
- an angularly rotatable turnstile (5) ;
wherein one of the two carabiners is provided with a return spring (10) which can be compressed or released in function of the squeezing or releasing of said handle,
**characterized in that**
the handle acts on said balancing lever by means of a own pin, which is formed on the handle and is sliding along an inclined guiding slit (13) worked in the carabiner body,
the turnstile is actuated by the insertion of a safety belay element (C) into the carabiner and the egress of said element (C) from the carabiner, and the balancing levers (3) of the two carabiners (A, B) is connected to each other by said inextensible cable (4') and its sheath (4) such that the first carabiner is allowed to open only when the second carabiner is closed, and vice versa.

2. Safety system with two carabiners according to claim 1, **characterized in that** the balancing lever element (3) which can be open and closed through an swinging movement comprises a L-shaped element which is pivoted at a connection point (8) of its two arms, the ends of the shorter arm (3') of the balancing lever element (3) of the two carabiners being connected to each other by means of said inextensible cable (4')

3. Safety system with two carabiners according to claims 1 and 2, **characterized in that** within the body (6) of each one of said carabiners a downwardly open cavity (11) is performed, said cavity being closed by a bored cap (14) secured to it by any suitable manner.

4. Safety system with two carabiners according to claims 1 to 3, **characterized in that** in one of said carabiners said cavity (11) houses a cylindrical compression spring (10) whose upper end is in contact with a shoulder (16) formed by the upper bored end of said cavity (11) and whose lower end lays against a head of a piston (9), said compression spring (10) being placed around the stem (9') of said piston (9) hich can slide with a vertical reciprocating motion, said inextensible cable (4' ) passing through said piston of one of the carabiners and through the caps (14) of both the carabiners.

5. Safety system with two carabiners according to claims 1 to 4, **characterized in that** one of the ends of said sheath (4) is secured to the bored cap (14) of one of the carabiners and the other end is connected to said piston (9), said inextensible cable (4') being connected to the shorter arm (3' ) of the balancing levers (3) of both the carabiners, passing through the own bored caps (14).

6. Safety system with two carabiners according to claims 1 to 5, **characterized in that** said angularly rotatable turnstile (5) is an L-shape element, pivoted at a joint point of its two arms (5',5") against which a resilient dragging blade presses, said turnstile being angularly rotated, respectively clockwise or anti-clockwise, by the egress from the carabiner or by the insertion into the carabiner of a safety belay element (C), such as a safety or cable rope.

7. Safety system with two carabiners according to claims 1 to 6, **characterized in that** the inextensible cable (4') and the sheath (4) are inserted in a sole element (20, 20', 20") connecting the two carabiners and connectable to the safety belt.

## Patentansprüche

1. Sicherheitssystem mit zwei jeweils an einem Selbstsicherungselement aufgehängten Karabinerhaken für Kletterzwecke, Abenteuerparks, Arbeiten an Ingenieurbauten oder Arbeiten, die Sicherheitsseile erfordern, wobei die zwei Karabinerhaken (A, B), die an dem Personensicherheitsgurt an einem Benutzer angebracht werden können, miteinander durch einen nicht dehnbaren Draht (4') und einen dimensional unveränderlichen Mantel (4) verbunden sind, wobei jeder Karabinerhaken Folgendes aufweist:
- einen Ausgleichshebel (3), der das Öffnen und Schließen des Karabinerhakens steuert;
- einen C-förmigen Karabinerhakenkörper (6),
- einen Griff (1), der wie eine Zange zusammengedrückt und freigegeben werden kann, wobei der Griff auf den Ausgleichshebel (3) wirkt;
- ein winkelig drehbares Drehkreuz (5);
wobei einer der zwei Karabinerhaken mit einer Rückstellfeder (10) versehen ist, die in Abhängigkeit des Zusammendrückens oder Freigebens des Griffs komprimiert oder gelöst werden kann,
**dadurch gekennzeichnet, dass**
der Griff auf den Ausgleichshebel mittels eines eigenen Stifts wirkt, der an dem Griff ausgebildet ist und entlang eines geneigten Führungsschlitzes (13) verschoben wird, der in den Karabinerkörper eingearbeitet ist;
das Drehkreuz durch die Einfügung eines Selbstsicherungselements (C) in den Karabinerhaken und das Heraustreten des Elements (C) aus dem Karabinerhaken betätigt wird; und
die Ausgleichshebel (3) der zwei Karabinerhaken (A, B) durch den nicht dehnbaren Draht (4') und seinen Mantel derart miteinander verbunden sind, dass sich der erste Karabinerhaken nur dann öffnen lässt, wenn der zweite Karabinerhaken geschlossen ist, und umgekehrt.

2. Sicherheitssystem mit zwei Karabinerhaken nach Anspruch 1, **dadurch gekennzeichnet, dass** das Ausgleichshebelelement (3), das durch eine Schwingbewegung geöffnet und geschlossen werden kann, ein L-förmiges Element umfasst, das an einem Verbindungspunkt (8) seiner zwei Arme schwenkbar ist, wobei die Enden des kürzeren Arms (3')des Ausgleichshebelelements (3) der zwei Karabinerhaken miteinander mittels des nicht dehnbaren Drahtes (4') verbunden sind.

3. Sicherheitssystem mit zwei Karabinerhaken nach Anspruch 1 und 2, **dadurch gekennzeichnet, dass** in dem Körper (6) von jedem der Karabinerhaken ein nach unten offener Hohlraum (11) ausgeführt ist, wobei der Hohlraum durch eine gebohrte Kappe (14) verschlossen ist, die daran in beliebiger geeigneter Weise gesichert ist.

4. Sicherheitssystem mit zwei Karabinerhaken nach Anspruch 1 bis 3, **dadurch gekennzeichnet, dass** in einem der Karabinerhaken der Hohlraum (11) eine zylindrische Druckfeder (10) unterbringt, deren oberes Ende mit einer Schulter (15) in Kontakt steht, die durch das obere gebohrte Ende des Hohlraums (11) ausgebildet ist, und deren unteres Ende gegen einen Kopf eines Kolbens (9) aufliegt, wobei die Druckfeder (10) um den Stamm (9') des Kolbens (9) angeordnet ist, der mit einer vertikalen Hin- und Herbewegung verschoben werden kann, wobei der nicht dehnbare Draht (4') durch den Kolben einer der Karabinerhaken und durch die Kappen (14) beider Karabinerhaken hindurchgeht.

5. Sicherheitssystem mit zwei Karabinerhaken nach Anspruch 1 bis 4, **dadurch gekennzeichnet, dass** eines der Enden des Mantels (4) an der gebohrten Kappe (14) einer der Karabinerhaken gesichert ist und das andere Ende mit dem Kolben (9) verbunden ist, wobei der nicht dehnbare Draht (4') mit dem kürzeren Arm (2') der Ausgleichshebel (3) beider Karabinerhaken verbunden ist und durch die eigenen gebohrten Kappen (14) geht.

6. Sicherheitssystem mit zwei Karabinerhaken nach Anspruch 1 bis 5, **dadurch gekennzeichnet, dass** das winkelige Drehkreuz (5) ein L-förmiges Element ist, das an einem Gelenkpunkt seiner zwei Arme (5', 5 ") schwenkbar ist, gegen die ein elastisches ziehendes Blatt presst, wobei das Drehkreuz durch das Heraustreten aus dem Karabinerhaken oder das Einfügen in den Karabinerhaken eines Selbstsicherungselements (C) wie eines Sicherheits- oder Drahtseils winkelig im Uhrzeigersinn bzw. entgegen dem Uhrzeigersinn gedreht wird.

7. Sicherheitssystem mit zwei Karabinerhaken nach Anspruch 1 bis 6, **dadurch gekennzeichnet, dass** der nicht dehnbare Draht (4') und der Mantel (4) in einem einzigen Element (20, 20', 20") eingefügt sind, das die zwei Karabinerhaken verbindet und mit dem Sicherheitsgurt verbindbar ist.

## Revendications

1. Système de sécurité à deux mousquetons, chacun devant être suspendu à un élément d'assurance à des fins d'escalade, pour des parcs d'aventure, des travaux sur des structures civiles ou des travaux nécessitant des câbles de sécurité, les deux mousquetons (A, B) aptes à être fixés à la ceinture de sécurité personnelle d'un utilisateur étant reliés l'un à l'autre au moyen d'un câble inextensible (4') et d'une gaine à dimension non modifiable (4), chaque mousqueton comprenant :
- un levier d'équilibrage (3) commandant l'ouverture et la fermeture du mousqueton ;
- un corps de mousqueton en forme de C (6) ;
- une poignée (1), qui peut être pressée et relâchée comme une pince, laquelle poignée agit sur ledit levier d'équilibrage (3) ;
- un tourniquet angulairement rotatif (5) ;
l'un des deux mousquetons comportant un ressort de rappel (10) qui peut être comprimé ou relâché en fonction de la pression ou du relâchement de ladite poignée, la poignée agissant sur ledit levier d'équilibrage au moyen d'une broche qui lui est propre, laquelle est formée sur la poignée et coulisse le long d'une fente de guidage inclinée (13) ménagée dans le corps de mousqueton, **caractérisé par le fait que** le tourniquet est actionné par l'introduction d'un élément d'assurance de sécurité (C) dans le mousqueton et la sortie dudit élément (C) à partir du mousqueton, et les leviers d'équilibrage (3) des deux mousquetons (A, B) sont reliés l'un à l'autre par ledit câble inextensible (4') et sa gaine (4) de telle sorte que le premier mousqueton est autorisé à s'ouvrir seulement lorsque le second mousqueton est fermé, et inversement.

2. Système de sécurité à deux mousquetons selon la revendication 1, **caractérisé par le fait que** l'élément de levier d'équilibrage (3) qui peut être ouvert et fermé au moyen d'un mouvement de balancement comprend un élément en forme de L qui est articulé en un point de liaison (8) de ses deux bras, les extrémités du bras plus court (3') de l'élément de levier d'équilibrage (3) des deux mousquetons étant reliées l'une à l'autre au moyen dudit câble inextensible (4').

3. Système de sécurité à deux mousquetons selon les revendications 1 et 2, **caractérisé par le fait qu'**à l'intérieur du corps (6) de chacun desdits mousquetons est ménagée une cavité ouverte vers le bas (11), ladite cavité étant fermée par un capuchon percé (14) fixé à celle-ci par tout moyen approprié.

4. Système de sécurité à deux mousquetons selon les revendications 1 à 3, **caractérisé par le fait que**, dans l'un desdits mousquetons, ladite cavité (11) reçoit un ressort de compression cylindrique (10) dont l'extrémité supérieure est en contact avec un épaulement (16) formé par l'extrémité percée supérieure de ladite cavité (11) et dont l'extrémité inférieure repose contre une tête d'un piston (9), ledit ressort de compression (10) étant placé autour de la tige (9') dudit piston (9) qui peut coulisser avec un mouvement alternatif vertical, ledit câble inextensible (4') passant à travers ledit piston de l'un des mousquetons et à travers les capuchons (14) des deux mousquetons.

5. Système de sécurité à deux mousquetons selon les revendications 1 à 4, **caractérisé par le fait que** l'une des extrémités de ladite gaine (4) est fixée au capuchon percé (14) de l'un des mousquetons et l'autre extrémité est reliée audit piston (9), ledit câble inextensible (4') étant relié au bras plus court (3') des leviers d'équilibrage (3) des deux mousquetons, en passant à travers leurs propres capuchons percés (14).

6. Système de sécurité à deux mousquetons selon les revendications 1 à 5, **caractérisé par le fait que** ledit tourniquet angulairement rotatif (5) est un élément en forme de L, articulé en un point de réunion de ses deux bras (5', 5") contre lequel appuie une lame élastique de résistance, ledit tourniquet étant amené à tourner angulairement, respectivement dans le sens horaire ou dans le sens antihoraire, par la sortie du mousqueton ou par l'introduction dans le mousqueton d'un élément d'assistance de sécurité (C), tel qu'une corde ou câble de sécurité.

7. Système de sécurité à deux mousquetons selon les revendications 1 à 6, **caractérisé par le fait que** le câble inextensible (4') et la gaine (4) sont introduits dans un seul élément (20, 20', 20") reliant les deux mousquetons et apte à être relié à la ceinture de sécurité.
